(19) Europäisches Patentamt / European Patent Office / Office européen des brevets

(11) **EP 3 230 998 B1**

(12) **FASCICULE DE BREVET EUROPEEN**

(45) Date de publication et mention
de la délivrance du brevet:
**05.12.2018 Bulletin 2018/49**

(21) Numéro de dépôt: **15807925.1**

(22) Date de dépôt: **10.12.2015**

(51) Int Cl.:
**H01H 33/44** *(2006.01)*      **H01H 33/59** *(2006.01)*
**H01H 9/56** *(2006.01)*

(86) Numéro de dépôt international:
**PCT/EP2015/079244**

(87) Numéro de publication internationale:
**WO 2016/092015 (16.06.2016 Gazette 2016/24)**

(54) **PROCÉDÉ DE MANOEUVRE DE CHARGES CAPACITIVES ET DISPOSITIF POUR LA MISE EN OEUVRE DU PROCÉDÉ**

VERFAHREN ZUM BETRIEB KAPAZITIVER LASTEN UND VORRICHTUNG ZUR DURCHFÜHRUNG DES VERFAHRENS

METHOD FOR OPERATING CAPACITIVE LOADS AND DEVICE FOR IMPLEMENTING THE METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.12.2014 FR 1462243**

(43) Date de publication de la demande:
**18.10.2017 Bulletin 2017/42**

(73) Titulaire: **General Electric Technology GmbH
5400 Baden (CH)**

(72) Inventeur: **FANGET, Alain
01390 Tramoyes (FR)**

(74) Mandataire: **Brevalex
95, rue d'Amsterdam
75378 Paris Cedex 8 (FR)**

(56) Documents cités:
DE-A1- 10 058 028      US-A- 5 563 459
US-A1- 2009 058 573      US-A1- 2013 300 215

**Description**

**DOMAINE TECHNIQUE**

La présente invention concerne un procédé de manoeuvre de charges capacitives et un dispositif pour la mise en oeuvre du procédé.

Cette manoeuvre, ou commutation commandée, s'effectue par l'intermédiaire d'un disjoncteur à haute tension (en anglais, *high voltage circuit breaker*).

Elle s'applique notamment aux manoeuvres intentionnelles d'exploitation de charges capacitives, telles que les batteries de condensateurs (en anglais, *capacitor banks*), les filtres et les lignes à vide non compensées, charges capacitives qui sont commandées par des IPO c'est-à-dire des disjoncteurs à pôles indépendants (en anglais, *independent pole operation circuit breakers*).

**ÉTAT DE LA TECHNIQUE ANTÉRIEURE**

Pour de telles manoeuvres, il est connu de mettre en oeuvre des résistances d'insertion ou une inductance-série ou encore un relai de synchronisation visant systématiquement un passage à zéro de la tension fournie par la source qui alimente les charges capacitives, dans le cas d'une fermeture.

Toutefois, ces techniques connues présentent des inconvénients de coût et de fiabilité pour ce qui concerne les résistances d'insertion.

De plus, viser un zéro de la tension fournie par la source nécessite une connaissance précise des caractéristiques du disjoncteur utilisé. Ce dernier doit avoir une faible dispersion de temps de fermeture et l'on doit connaître la RDDS du disjoncteur c'est-à-dire la vitesse de décroissance de la rigidité diélectrique (en anglais, *rate-of-decay of dielectric strength*) de ce disjoncteur, lors de la fermeture.

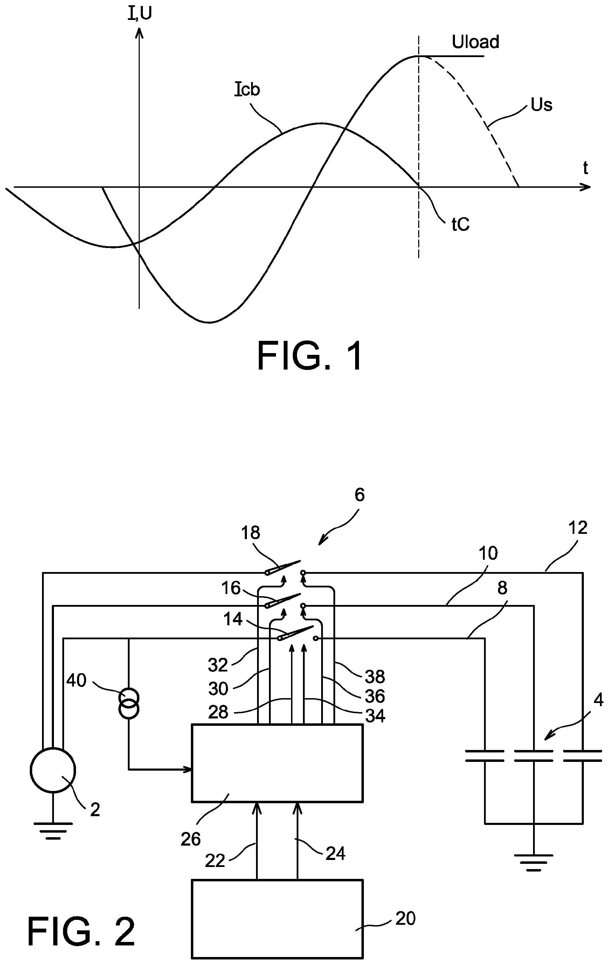

Revenons sur les manoeuvres synchronisées en faisant référence à la figure 1 des dessins annexés. Elle illustre schématiquement, pour l'une des trois phases, l'interruption d'un courant capacitif. Le temps t est porté en abscisses et les tensions U et intensités I en ordonnées.

Icb représente le courant circulant dans le disjoncteur, Uload la tension aux bornes d'une charge capacitive, Us la tension de la source alimentant cette charge capacitive, Us étant égale à Uload lorsque le disjoncteur est fermé, et tC le moment où le courant Icb est interrompu. On rappelle que le courant s'annule un peu après la séparation des contacts du disjoncteur. L'intervalle de temps correspondant s'appelle la durée d'arc (en anglais, *arcing time*) et vaut environ quelques millisecondes.

Comme on l'a vu plus haut, lors de la synchronisation de la commutation d'une charge capacitive, une opération synchronisée de fermeture se produit traditionnellement au passage à zéro de la tension de la source alimentant la charge capacitive. Il s'agit du point optimal si la charge capacitive est déchargée.

Mais c'est rarement le cas : lors de l'ouverture précédente, le courant est interrompu lorsque la tension atteint un extremum, comme l'illustre la figure 1 (on rappelle que le courant est en avance de 90° sur la tension dans les circuits capacitifs) ; et cela conduit à une charge (électrique) piégée (en anglais, *trapped (electric) charge*) correspondant à une tension égale à +1 pu ou -1 pu, où 1 pu, c'est-à-dire 1 *per unit,* représente ici 100% de la tension nominale.

Une fermeture au passage à zéro de la tension de source n'est alors plus optimale - il s'agit d'un compromis pour éviter le pire des cas : une fermeture lors d'une polarité opposée. De plus, viser un passage à zéro de la tension de source nécessite une bonne précision et/ou une bonne cohérence du disjoncteur, en termes de temps de fonctionnement, ainsi qu'une RDDS suffisante.

En outre, les transformateurs de tension ne fournissent aucune information sur les tensions continues : en cas de charge piégée, la sortie d'un transformateur de tension retombe à zéro. Il en résulte qu'il est impossible de distinguer la charge piégée (en anglais, *trapped charge*) réelle de la charge (en anglais, *load*) ou la ligne réellement déchargée.

Un procédé selon le préambule de la revendication 1 et un dispositif selon le préambule de la revendication 4 sont connus de US 2013/300215 A1.

**EXPOSÉ DE L'INVENTION**

La présente invention vise à remédier aux inconvénients précédents.

Elle permet d'alimenter une charge capacitive

- sans courant d'appel (en anglais, *inrush current*) excessif, notamment dans le cas de batteries de condensateurs à gradins (en anglais, *back-to-back capacitor banks*), et
- sans surtension (en anglais, *overvoltage*) excessive, notamment dans le cas de lignes non compensées.

Elle permet également une gestion optimisée des charges capacitives.

En outre, elle facilite la mise en oeuvre avec un disjoncteur de haute tension dont le temps de fermeture a une dispersion naturelle excessive et/ou dont la RDDS est insuffisante.

De façon précise, la présente invention a pour objet un procédé pour manoeuvrer au moins une charge capacitive, alimentée par une source de tension triphasée, ayant ainsi trois phases qui sont déphasées les unes par rapport aux autres, par l'intermédiaire d'un disjoncteur à pôles indépendants, qui reçoit des ordres d'ouverture et de fermeture et qui est apte à effectuer des opérations d'ouverture et de fermeture pour chacune des trois phases, lors de manoeuvres intentionnelles, et dans lequel

- on fixe une durée d'arc pour le disjoncteur,
- on mesure l'une des tensions des trois phases de la source, en amont du disjoncteur,
- on contrôle et l'on mémorise la valeur d'une charge électrique piégée au niveau de la charge capacitive à chaque ouverture du disjoncteur, et ce, pour les trois phases, et
- on tient compte de cette valeur pour les opérations de fermeture.

Selon divers modes de réalisation préférés du procédé, objet de l'invention :

- on effectue les manoeuvres intentionnelles d'ouverture des trois phases en effectuant, pour chaque phase, une séparation des contacts du disjoncteur, synchronisée avec un instant qui est en avance de la durée d'arc fixée, par rapport à un instant correspondant à un pic de tension, étant donné une détection de passages par zéro d'une unique tension de référence $\underline{v}$, en considérant seulement les passages par zéro où $\underline{v}$ a une pente $dv/dt$ constante, soit positive soit négative, et qui reste fixe pendant les enchaînements ouverture-fermeture ;
- on effectue les manoeuvres intentionnelles de fermeture des trois phases en fermant chacune de celles-ci au moment où la tension prospective que l'on va imposer aux bornes de chaque charge capacitive correspond à la charge piégée, qui a été mémorisée lors d'une ouverture précédant cette fermeture.

La présente invention concerne aussi un dispositif pour manoeuvrer au moins une charge capacitive, alimentée par une source de tension triphasée, ayant ainsi trois phases qui sont déphasées les unes par rapport aux autres, comprenant :

- un disjoncteur à pôles indépendants, par l'intermédiaire duquel la source alimente la charge capacitive et qui est prévu pour effectuer des opérations d'ouverture et de fermeture pour chacune des trois phases, lors de manoeuvres intentionnelles, et
- un système de contrôle-commande, adapté pour envoyer des ordres d'ouverture et de fermeture au disjoncteur, le dispositif comprend en outre un dispositif de synchronisation
- qui reçoit les ordres d'ouverture et de fermeture et commande le disjoncteur,
- dans lequel est mémorisée une durée d'arc fixée pour le disjoncteur,
- qui reçoit des signaux représentatifs de l'une des tensions des trois phases de la source, en amont du disjoncteur,
- qui est adapté pour contrôler la valeur d'une charge électrique piégée au niveau de la charge capacitive à chaque ouverture du disjoncteur, et ce, pour les trois phases, et pour tenir compte de cette valeur pour les opérations de fermeture, et
- qui mesure le temps écoulé depuis chaque manoeuvre d'ouverture et qui bascule automatiquement d'une cible crête de tension à une cible zéro de tension, dans le cas où le temps écoulé au moment de la fermeture est excessif.

Un avantage de l'invention réside dans le fait qu'elle ne nécessite pas d'instrumentation supplémentaire pour sa mise en oeuvre : cette instrumentation est déjà présente sur la ligne du réseau à haute tension, destinée à être manoeuvrée au moyen du disjoncteur.

## BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :

- la figure 1 illustre schématiquement, pour l'une des trois phases, l'interruption d'un courant capacitif et a déjà été décrite,
- la figure 2 est une vue schématique d'un mode de réalisation particulier du dispositif, objet de l'invention,
- la figure 3 est un graphique montrant un instant optimal que l'on vise pour fermer l'une des phases à l'aide d'un disjoncteur utilisable dans l'invention,

- la figure 4 est un graphique montrant un instant traditionnel que l'on vise pour fermer la même phase à l'aide du même disjoncteur,
- la figure 5 illustre schématiquement un système capacitif dont le neutre est mis à la terre,
- la figure 6 illustre schématiquement une séquence optimisée d'ouverture, correspondant au système représenté sur la figure 5,
- la figure 7 illustre schématiquement une séquence optimisée de fermeture, correspondant au système représenté sur la figure 5,
- la figure 8 illustre schématiquement un système capacitif dont le neutre est flottant ou n'est pas mis à la terre,
- la figure 9 illustre schématiquement une séquence optimisée d'ouverture, correspondant au système représenté sur la figure 8, et
- la figure 10 illustre schématiquement une séquence optimisée de fermeture, correspondant au système représenté sur la figure 8.

## EXPOSÉ DÉTAILLÉ DE MODES DE RÉALISATION PARTICULIERS

La figure 2 est une vue schématique d'un mode de réalisation particulier du dispositif de manoeuvre de charges capacitives, objet de l'invention.

On y voit une source de haute tension triphasée 2 qui alimente une charge capacitive 4, par exemple un banc de condensateurs ou une ligne de transmission, par l'intermédiaire d'un disjoncteur 6 de type IPO, c'est-à-dire d'un disjoncteur à pôles indépendants. Les trois lignes 8, 10 et 12 correspondent respectivement aux trois phases de la source 2 et relient donc celle-ci à la charge capacitive 4.

Le disjoncteur 6 est prévu pour effectuer des opérations d'ouverture et de fermeture pour chacune des trois phases, lors de manoeuvres intentionnelles. Ce disjoncteur comporte trois mécanismes 14, 16 et 18, lui permettant d'agir sur chacune des trois phases, indépendamment des deux autres. Un tel disjoncteur est effectivement adapté aux hautes tensions triphasées, supérieures à $10^5$ volts et généralement supérieures à 145 kV.

Outre le disjoncteur 6, le dispositif représenté sur la figure 2 comprend aussi un système de contrôle-commande 20 qui peut être très éloigné du disjoncteur 6 et qui est adapté pour envoyer à ce dernier des ordres d'ouverture et des ordres de fermeture, respectivement par l'intermédiaire de deux lignes 22 et 24 : ce système 20 envoie un même ordre d'ouverture pour les trois phases et un même ordre de fermeture pour celles-ci.

Conformément à l'invention, le dispositif représenté sur la figure 2 comprend en outre un dispositif de synchronisation 26 dans lequel est mis en oeuvre un procédé conforme à l'invention. Ce dispositif de synchronisation 26 est relié au système 20 par l'intermédiaire des lignes 22 et 24 pour en recevoir les ordres d'ouverture et de fermeture. Et le dispositif de synchronisation 26 est prévu pour traiter ces ordres et commander le disjoncteur 6 au moyen des ordres ainsi traités.

On précise que l'on a fixé une durée d'arc à l'ouverture pour le disjoncteur 6 et que cette durée d'arc est mémorisée dans le dispositif de synchronisation 26.

Sur la figure 2, on voit trois lignes 28, 30 et 32 qui sont issues du dispositif de synchronisation 26 et aboutissent respectivement aux trois mécanismes 14, 16 et 18 pour leur transmettre des ordres d'ouverture appropriés aux manoeuvres d'ouverture souhaitées. On voit aussi trois autres lignes 34, 36 et 38 qui sont encore issues du dispositif de synchronisation 26 et aboutissent respectivement aux trois mécanismes 14, 16 et 18 pour leur transmettre des ordres de fermeture appropriés aux manoeuvres de fermeture souhaitées.

Les ordres d'ouverture, envoyés vers les phases correspondantes, sont décalés de façon optimale dans le temps les uns par rapport aux autres. Il en est de même pour les ordres de fermeture.

Le dispositif de manoeuvre de charges capacitives, représenté sur la figure 2, comprend aussi un transformateur de tension 40, monté sur la ligne 8, en amont du disjoncteur et donc du côté de la source 2, et servant à mesurer la tension d'une phase de référence choisie arbitrairement (les tensions des deux autres phases se déduisent de cette mesure et, plus généralement, il suffit de mesurer l'une des trois tensions pour connaître les deux autres).

Les signaux émis par ce transformateur 40 (et représentatifs des mesures effectuées par ceux-ci) sont envoyés au dispositif de synchronisation 26.

Ce dernier traite les ordres qu'il reçoit du système 20. Le traitement de ces ordres utilise les signaux ainsi reçus. Et le dispositif 26 commande le disjoncteur 6, plus précisément le dispositif d'actionnement (non représenté) dont est muni le disjoncteur 6, en fonction des ordres ainsi traités. En particulier, le dispositif 26 calcule des retards en temps réel pour les ordres qui lui parviennent et les retarde ainsi de durées qui peuvent différer d'une phase à l'autre.

On précise en outre que le dispositif de synchronisation 26 est adapté pour déterminer le signe d'une charge électrique piégée au niveau de la charge capacitive 4 à chaque ouverture du disjoncteur 6, et ce, pour les trois phases, et pour tenir compte de ce signe pour les opérations de fermeture.

On donne ci-après un exemple du procédé, objet de l'invention, en faisant référence à la figure 2. Ce procédé permet de manoeuvrer la charge capacitive 4, alimentée par la source de tension triphasée 2 (ayant trois phases qui sont déphasées les unes par rapport aux autres), par l'intermédiaire du disjoncteur à pôles indépendants 6.

On rappelle que ce dernier reçoit des ordres d'ouverture et de fermeture et qu'il effectue les opérations correspondantes pour chacune des trois phases, lors de manoeuvres intentionnelles. On rappelle aussi que l'on a fixé une durée d'arc pour le disjoncteur 6.

On rappelle en outre que l'on mesure l'une des tensions des trois phases de la source 2, on contrôle et l'on mémorise la valeur d'une charge électrique piégée au niveau de la charge capacitive 4 à chaque ouverture du disjoncteur 6, et ce, pour les trois phases, et l'on tient compte de cette valeur pour les opérations de fermeture. De plus, on effectue des ouvertures synchronisées, dans le cas des manoeuvres intentionnelles.

On décrit ci-après la gestion des opérations d'ouverture et de fermeture dans l'exemple considéré.

A) Manoeuvres intentionnelles d'ouverture des trois phases

Pour ce type de manoeuvres, les ordres transitent par le dispositif de synchronisation 26.

On effectue, pour chaque phase, une manoeuvre (interruption du courant) synchronisée avec un instant qui est en avance de la durée d'arc fixée, par rapport à un instant correspondant à un pic de tension aux bornes de chaque charge capacitive, étant donné une détection de passages par zéro d'une unique tension de référence v(t), choisie parmi trois tensions source. On considère seulement les passages par zéro de v(t) en lesquels v(t) a une pente dv/dt constante, soit positive soit négative, de façon à sélectionner un pic de tension connu, soit positif soit négatif.

Pour un système triphasé avec neutre à la terre, les angles de synchronisation, pour ce qui concerne le passage par zéro d'une tension de source de référence unique v(t), avec dv/dt constant, sont 90°/30°/150° (phase de référence, phase en déphasage de -120°, phase en déphasage de -240°). Pour la phase de référence, la séparation des contacts est programmée 90° après un passage à zéro à dv/dt constant de la phase de référence, moins la durée d'arc programmée. Pour la phase déphasée de -120° par rapport à la phase de référence, la séparation des contacts est programmée 30° après un passage à zéro à dv/dt constant de la phase de référence, moins la durée d'arc programmée. Pour la phase déphasée de -240° par rapport à la phase de référence, la séparation des contacts est programmée 150° après un passage à zéro à dv/dt constant de la phase de référence, moins la durée d'arc programmée. Cette procédure permet d'imposer un temps d'arc voulu pour chaque disjoncteur et permet d'imposer une charge piégée connue pour chaque charge capacitive, après ouverture.

Pour un système triphasé avec neutre isolé, les angles de synchronisation, pour ce qui concerne le passage par zéro d'une tension de source de référence unique v(t), avec dv/dt constant, sont 90°/180°/180° (phase de référence, phase en déphasage de -120°, phase en déphasage de -240°). Pour la phase de référence, première phase à ouvrir, avant la manoeuvre le régime est équilibré, la tension de neutre est nulle : la séparation des contacts est programmée 90° après un passage à zéro à dv/dt constant de la phase de référence, moins la durée d'arc programmée, comme si le neutre était relié à la terre. Pour les phases déphasées de -120° et de -240° par rapport à la phase de référence, la séparation des contacts est programmée simultanément, 180° après un passage à zéro à dv/dt constant de la phase de référence, ce qui correspond à une crête de la tension différentielle aux bornes de ces deux phases mises en série par le neutre (et donc un passage à zéro du courant), moins la durée d'arc programmée. Cette procédure permet d'imposer un temps d'arc voulu pour chaque disjoncteur et permet d'imposer une charge piégée connue pour chaque charge capacitive, après ouverture.

B) Manoeuvres intentionnelles de fermeture des trois phases

1. On ferme chaque phase de façon à établir le courant au moment où la tension prospective aux bornes de chaque charge capacitive correspond à la valeur de la charge piégée lors de la dernière ouverture commandée.

2. Pour un système de puissance triphasé, dont le neutre est mis à la terre, les instants optimaux d'établissement du courant correspondent à des maximums ou des minimums de la tension source 2. Les angles de synchronisation, pour ce qui concerne le passage par zéro d'une tension de source de référence unique v(t), avec dv/dt constant, sont 90°/30°/150° (phase de référence, phase en déphasage de -120°, phase en déphasage de -240°). Pour la phase de référence, l'établissement du courant est programmé 90° après un passage à zéro à dv/dt constant de la phase de référence. Pour la phase déphasée de -120° par rapport à la phase de référence, l'établissement du courant est programmé 30° après un passage à zéro à dv/dt constant de la phase de référence. Pour la phase déphasée de -240° par rapport à la phase de référence, l'établissement du courant est programmé 150° après un passage à zéro à dv/dt constant de la phase de référence.

3. Pour un système de puissance triphasé, dont le neutre n'est pas mis à la terre, les angles de synchronisation, pour ce qui concerne le passage par zéro d'une tension de source de référence unique v(t), avec dv/dt constant, sont 450°/180°/180° (phase de référence, phase en déphasage de -120°, phase en déphasage de -240°). Deux premières phases (-120° et -240°) sont fermées simultanément, sur une crête de leur tension différentielle qui correspond à une valeur prospective de tension égale à la somme des charges piégées dans les deux charges capacitives de ces deux phases mises en série par le neutre. La phase de référence est ensuite fermée sur une crête ultérieure de la tension de référence, instant ou la tension du neutre passe par zéro et ou la tension prospective est donc de +1pu, égale à la charge piégée de cette phase.

4. En ce qui concerne le délai maximum de prise en compte des charges piégées (en anglais, *timeout*) paramétré, si un temps excessif s'est écoulé depuis la dernière ouverture, on fermera chaque phase de façon à établir le courant au moment où la tension prospective imposée par la source 2 (figure 2) est égale à zéro.

Pour un système de puissance triphasé, dont le neutre est mis à la terre, les angles de synchronisation sont 0°/120°/60° (passages à zéro successifs des trois tensions source).

Pour un système de puissance triphasé, dont le neutre n'est pas mis à la terre, les angles de synchronisation sont 180°/90°/90° (fermeture de deux premières phases sur un passage à zéro de la tension différentielle source de ces deux phases, fermeture de la dernière phase sur un passage à zéro de la tension de référence, tension de neutre nulle à ce moment).

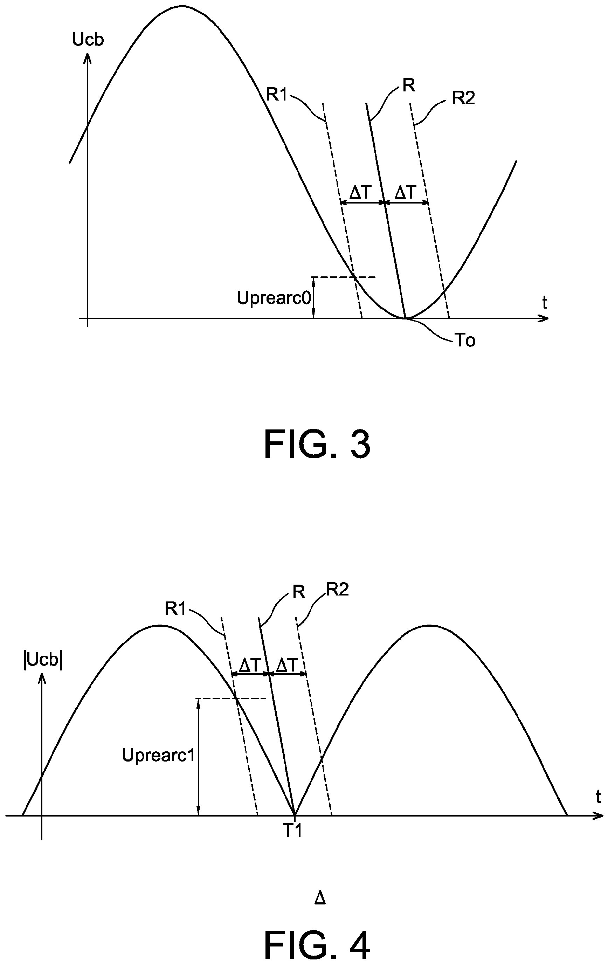

On considère maintenant, en faisant référence aux figures 3 et 4, les manoeuvres de fermeture : cible tension de source maximale ou minimale, correspondant à la valeur de charge piégée, comparée à une cible tension de source nulle ; et diverses exigences en ce qui concerne la précision du disjoncteur et sa RDDS.

La figure 3 est un graphique montrant un instant optimal T0 que l'on vise pour fermer l'une des phases à l'aide d'un disjoncteur considéré dans la présente invention, tel que le disjoncteur 6 de la figure 2, en tenant compte de la charge piégée, considérée comme égale à 1pu dans l'exemple. Sur la figure 3, la tension Ucb aux bornes de ce disjoncteur est représentée en fonction du temps t.

$\Delta$T représente la dispersion aléatoire naturelle du temps de fermeture du disjoncteur autour de T0. La tension de préarc, tension à laquelle la fermeture s'opère effectivement (instant où le courant commence à circuler), est notée Uprearc.

On voit également une droite R qui passe par le point T0 et dont la pente est égale à la RDDS du disjoncteur (décroissance de la tenue diélectrique du disjoncteur lorsque les contacts sont en rapprochement, lors de la fermeture). Cette dernière est exprimée en kV/ms si Ucb est exprimée en kV et t en ms. Les droites R1 et R2 sont parallèles à la droite R et rencontrent respectivement l'axe des temps aux points T0-$\Delta$T et T0+$\Delta$T. Ces droites R1 et R2 indiquent les points de fermeture effectifs possibles, aux extrêmes, compte tenu de la dispersion aléatoire du disjoncteur.

A titre de comparaison, on se réfère à présent à la figure 4. Il s'agit d'un graphique montrant un instant traditionnel T1 que l'on vise pour fermer la même phase à l'aide du même disjoncteur, en tenant seulement compte d'un passage par zéro de la tension de la source triphasée, telle que la source 2 de la figure 2. La valeur absolue de la tension Ucb aux bornes du disjoncteur est représentée en fonction du temps t sur la figure 4. Il n'y a pas de charge piégée et l'on prend comme cible un zéro de la tension de la source.

On voit également des droites R, R1 et R2 et un paramètre $\Delta$T qui sont respectivement les homologues des droites R, R1 et R2 et du paramètre $\Delta$T de la figure 3.

Etant donné que la tension Uprearc0 (figure 3) est très inférieure à la tension Upreac1 (figure 4), on en conclut que le cas de la figure 3 est plus favorable que le cas de la figure 4. Graphiquement, on constate que la fenêtre temporelle permettant de viser le point T0 sans préarc excessif est plus large dans le cas de la figure 3 que la fenêtre temporelle permettant de viser T1, cas de la figure 4. En d'autres termes, les figures 3 et 4 mettent en évidence l'avantage d'une gestion du disjoncteur qui utilise la charge piégée et la possibilité d'utiliser un disjoncteur avec une RDDS plus faible.

On considère à présent des cas pratiques, relatifs à des manoeuvres intentionnelles (ouverture des trois phases et fermeture des trois phases).

On rappelle ce qui suit :

- dans les circuits capacitifs, le courant est « en avance de 90° » sur la tension ;
- l'interruption du courant se produit lors d'un passage à zéro du courant (durée d'arc).

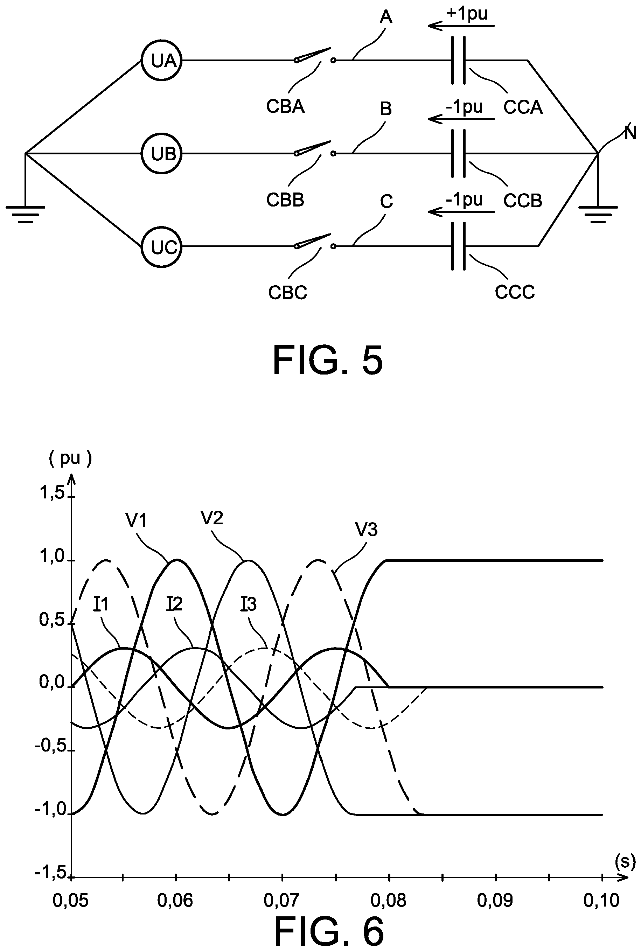

La figure 5 illustre schématiquement un système capacitif triphasé dont le neutre N est mis à la terre. Les trois lignes A, B et C correspondent respectivement aux trois phases. Les trois tensions de source UA, UB et UC sont respectivement associées aux lignes A, B et C. La tension UA sert ici de tension de référence. Les trois disjoncteurs élémentaires, CBA, CBB et CBC sont respectivement associés aux lignes A, B et C. Les trois charges capacitives CCA, CCB et CCC sont respectivement associées à ces lignes A, B et C. Au dessus de chaque charge capacitive élémentaire, on a noté la charge piégée qui lui correspond dans un exemple de l'invention. L'ensemble des disjoncteurs élémentaires CBA, CBB et CBC correspond à un disjoncteur du genre de celui qui a la référence 6 sur la figure 2. Et l'ensemble des charges capacitives élémentaires CCA, CCB et CCC correspond à une charge capacitive du genre de celle qui a la référence 4 sur la figure 2.

Pour un système du genre de celui qui est représenté sur la figure 5, la séquence des ouvertures, fixées pour l'interruption du courant, est donnée dans le tableau I :

Tableau I

| Phase de référence | Phase de référence -120° | Phase de référence -240° |
|---|---|---|
| 90° | 30° | 150° |

Selon la première colonne du tableau I, on choisit une phase de référence et l'on impose au courant de s'annuler « 90° » après un passage à zéro de la tension de référence, ce passage à zéro se faisant avec une pente ascendante pour la tension de référence : dv/dt>0.
Les deux autres colonnes donnent le moment (exprimé en degrés) d'annulation du courant pour chacune des deux autres phases.
En pratique, le dispositif 26 programme la séparation des contacts avant un instant décalé de la durée d'arc choisie. Cela permet à la polarité, ou signe, de la charge piégée d'être conforme au tableau II (voir aussi la figure 5) :

Tableau II

| Phase de référence | Phase de référence -120° | Phase de référence -240° |
|---|---|---|
| Positive, +1pu | Négative, -1pu | Négative, -1pu |

La séquence optimale pour la fermeture suivante, est la même que pour l'ouverture précédente, comme le montre le tableau III :

Tableau III

| Phase de référence | Phase de référence -120° | Phase de référence -240° |
|---|---|---|
| 90° | 30° | 150° |

On rappelle que l'on prend pour cibles les pics de tension source successifs selon la polarité de la charge piégée.
La figure 6 montre la séquence optimisée des ouvertures pour un système du genre de celui qui est représenté sur la figure 5. Le temps est exprimé en secondes et porté en abscisse. En ordonnée, on a porté des valeurs de tension, exprimées en pu. Les courbes V1, V2 et V3 sont les courbes des tensions côté charge, correspondant respectivement à la phase de référence, à la phase de référence moins 120° et à la phase de référence moins 240°C. On note que les tensions restent constantes après ouverture. On voit aussi la séquence d'interruption des courants dont les courbes I1, I2 et I3 correspondent respectivement aux courbes V1, V2 et V3.

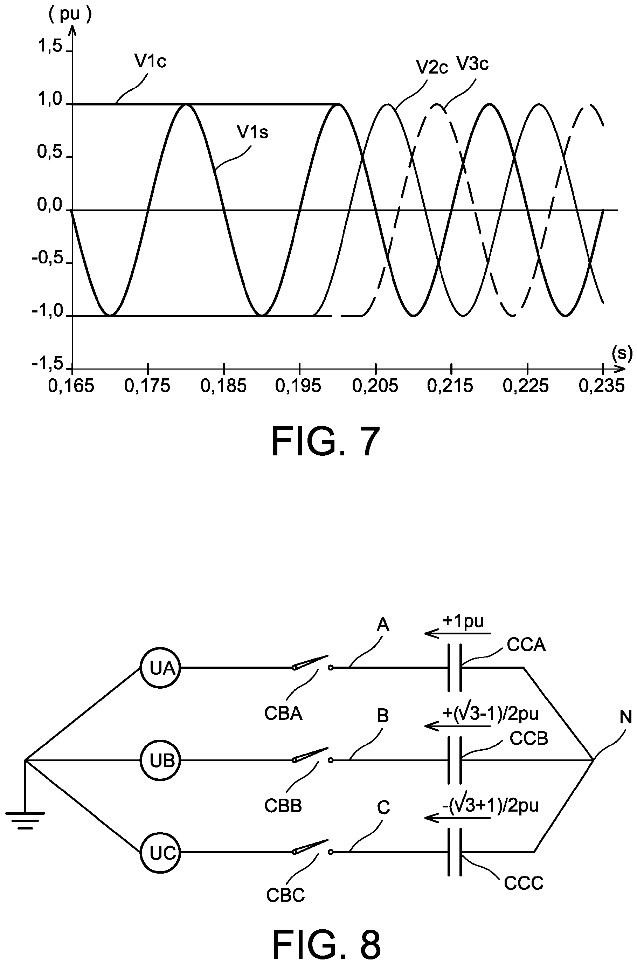

La figure 7 montre la séquence optimisée des fermetures pour un système du genre de celui qui est représenté sur la figure 5. Le temps est exprimé en secondes et porté en abscisse. En ordonnée, on a porté des valeurs de tension, exprimées en pu.
Les courbes V1s, V1c, V2c et V3c sont les courbes des tensions correspondant respectivement à la tension côté source pour la phase de référence, à la tension côté charge pour la phase de référence, à la tension côté charge pour la phase de référence moins 120° et à la tension côté charge pour la phase de référence moins 240°C.
La figure 8 illustre schématiquement un système capacitif dont le neutre N est flottant ou n'est pas mis à la terre. Les trois lignes A, B et C correspondent respectivement aux trois phases. Les trois tensions de source UA, UB et UC sont respectivement associées aux lignes A, B et C. La tension UA sert ici de tension de référence. Les trois disjoncteurs élémentaires CBA, CBB et CBC sont respectivement associés aux lignes A, B et C. Les trois charges capacitives élémentaires CCA, CCB et CCC sont respectivement associées à ces lignes A, B et C. Au-dessus de chaque charge capacitive élémentaire, on a noté la charge piégée, calculée et restante, qui lui correspond dans un exemple de l'invention. L'ensemble des disjoncteurs élémentaires CBA, CBB et CBC correspond à un disjoncteur du genre de celui qui a la référence 6 sur la figure 2. Et l'ensemble des charges capacitives élémentaires CCA, CCB et CCC correspond à une charge capacitive du genre de celle qui à la référence 4 sur la figure 2.
Pour un système du genre de celui qui est représenté sur la figure 8, la séquence des ouvertures, fixée pour l'interruption du courant, est donnée dans le tableau IV :

Tableau IV

| Phase de référence | Phase de référence -120° | Phase de référence -240° |
|---|---|---|
| 90° | 180° | 180° |

Selon la première colonne du Tableau IV, on choisit une phase de référence et l'on impose au courant de s'annuler « 90° » après un passage à zéro de la tension de référence, ce passage à zéro se faisant avec une pente ascendante pour la tension de référence : dv/dt>0.

Les deux autres colonnes donnent le moment (exprimé en degrés) d'annulation du courant pour chacune des deux autres phases.

En pratique, le dispositif 26 (figure 2) programme la séparation des contacts, à un instant antérieur, décalé de la durée d'arc choisie. Cela permet aux polarités ou aux valeurs des charges piégées d'être conforme au tableau V (synchronisation aux passages à zéro de la tension de référence, avec dv/dt positif) :

Tableau V

| Phase de référence | Phase de référence -120° | Phase de référence -240° |
|---|---|---|
| Positive, +1pu | Positive $+(\sqrt{3}-1)/2\,pu$ | Négative $-(\sqrt{3}+1)/2\,pu$ |

On note que la différence entre les phases « phase de référence -120° » et « phase de référence -240° » est égale à $\sqrt{3}\,pu$ (1pu = crête de tension de la phase par rapport à la terre). La séquence optimale pour la fermeture suivante, consiste à fermer simultanément la « phase de référence -120° » et la « phase de référence -240° » lors d'un maximum de la tension différentielle (amplitude : $\sqrt{3}\,pu$, 1pu = crête de tension de phase par rapport à la terre), la phase restante à fermer étant manoeuvrée 3/4 de période après. On se reportera au tableau VI :

Tableau VI

| Phase de référence | Phase de référence -120° | Phase de référence -240° |
|---|---|---|
| 450° | 180° | 180° |

On rappelle que l'on prend pour cibles les pics de tension source successifs selon la polarité de la charge piégée.

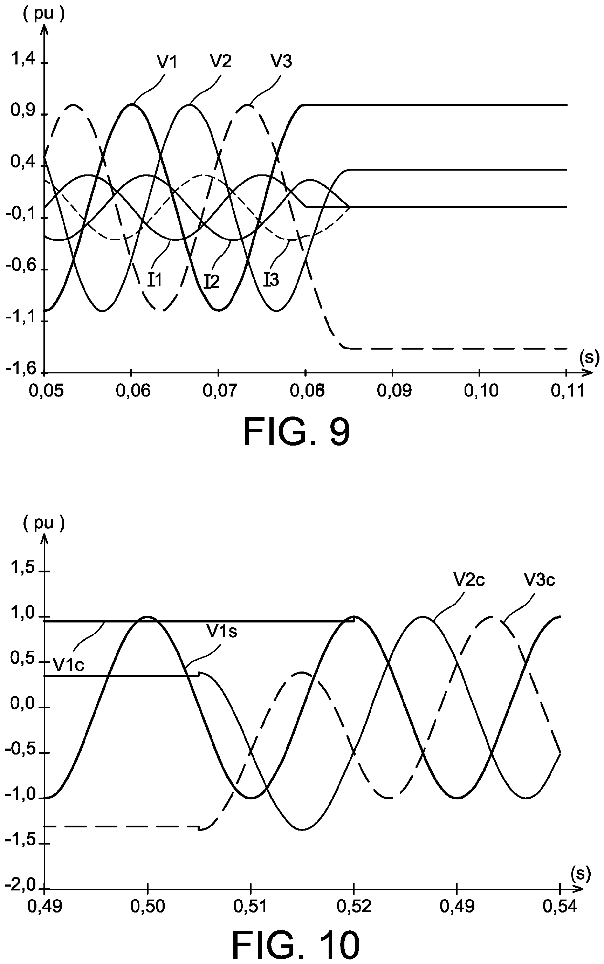

La figure 9 montre la séquence optimisée des ouvertures pour un système du genre de celui-ci qui est représenté sur la figure 8. Le temps est exprimé en secondes et porté en abscisse. En ordonnée, on a porté des valeurs de tension, exprimées en pu. Les courbes V1, V2 et V3 sont les courbes des tensions correspondant respectivement à la phase de référence, à la phase de référence moins 120° et à la phase de référence moins 240°. On note que les tensions restent constantes après ouverture. On voit aussi la séquence d'interruption des courants dont les courbes I1, I2 et I3 correspondent respectivement aux courbes V1, V2 et V3.

La figure 10 montre la séquence optimisée des fermetures pour un système du genre de celui qui est représenté sur la figure 8. Le temps est exprimé en secondes et porté en abscisse. En ordonnée, on a porté des valeurs de tension, exprimées en pu. Les courbes V1s, V1c, V2c et V3c sont les courbes des tensions correspondant respectivement à la tension côté source pour la phase de référence à la tension côté charge pour la phase de référence, à la tension côté charge pour la phase de référence, moins 120° et à la tension côté charge pour la phase de référence moins 240°.

**Revendications**

1.  Procédé pour manoeuvrer au moins une charge capacitive (4), alimentée par une source de tension triphasée (2), ayant ainsi trois phases qui sont déphasées les unes par rapport aux autres, par l'intermédiaire d'un disjoncteur à pôles indépendants (6), qui reçoit des ordres d'ouverture et de fermeture et qui est apte à effectuer des opérations d'ouverture et de fermeture pour chacune des trois phases, lors de manoeuvres intentionnelles, et dans lequel

    - on fixe une durée d'arc pour le disjoncteur (6),
    - on mesure l'une des tensions des trois phases de la source (2), en amont du disjoncteur, **caractérisé en ce que**:

- on contrôle et l'on mémorise la valeur d'une charge électrique piégée au niveau de la charge capacitive (4) à chaque ouverture du disjoncteur (6), et ce, pour les trois phases, et
- on tient compte de cette valeur pour les opérations de fermeture.

**2.** Procédé selon la revendication 1, dans lequel on effectue les manoeuvres intentionnelles d'ouverture des trois phases en effectuant, pour chaque phase, une séparation des contacts du disjoncteur (6), synchronisée avec un instant qui est en avance de la durée d'arc fixée, par rapport à un instant correspondant à un pic de tension, étant donné une détection de passages par zéro d'une unique tension de référence $\underline{v}$, en considérant seulement les passages par zéro où $\underline{v}$ a une pente d$\underline{v}$/dt qui est constante, soit positive soit négative, et qui reste fixe pendant les enchaînements ouverture fermeture.

**3.** Procédé selon la revendication 1, dans lequel on effectue les manoeuvres intentionnelles de fermeture des trois phases en fermant chacune de celles-ci au moment où la tension prospective, que l'on va imposer aux bornes de chaque charge capacitive, correspond à la charge piégée, qui a été mémorisée lors d'une ouverture précédant cette fermeture.

**4.** Dispositif pour manoeuvrer au moins une charge capacitive (4), alimentée par une source de tension triphasée (2), ayant ainsi trois phases qui sont déphasées les unes par rapport aux autres, comprenant :

- un disjoncteur à pôles indépendants (6), par l'intermédiaire duquel la source alimente la charge capacitive et qui est prévu pour effectuer des opérations d'ouverture et de fermeture pour chacune des trois phases, lors de manoeuvres intentionnelles, et
- un système de contrôle-commande (20), adapté pour envoyer des ordres d'ouverture et de fermeture au disjoncteur (6), et un dispositif de synchronisation (26)
- qui reçoit les ordres d'ouverture et de fermeture et commande le disjoncteur (6),
- dans lequel est mémorisée une durée d'arc fixée pour le disjoncteur,
- qui reçoit des signaux représentatifs de l'une des tensions des trois phases de la source (2), en amont du disjoncteur (6), **caractérisé en ce que** le dispositif de synchronisation est adapté pour contrôler la valeur d'une charge électrique piégée au niveau de la charge capacitive (4) à chaque ouverture du disjoncteur (6), et ce, pour les trois phases, et pour tenir compte de cette valeur pour les opérations de fermeture, et mesure le temps écoulé depuis chaque manoeuvre d'ouverture et qui bascule automatiquement d'une cible crête de tension à une cible zéro de tension, dans le cas où le temps écoulé au moment de la fermeture est excessif.

**Patentansprüche**

**1.** Verfahren zum Betätigen wenigstens einer kapazitiven Last (4), die von einer Dreiphasenspannungsquelle (2) gespeist wird, die somit drei Phasen aufweist, welche zueinander phasenverschoben sind, über einen Schutzschalter mit unabhängigen Polen (6), welcher Öffnungs- und Schließbefehle empfängt und welcher in der Lage ist, Öffnungs- und Schließvorgänge für jede der drei Phasen bei absichtlichen Betätigungen durchzuführen, und wobei

- eine Lichtbogendauer für den Schutzschalter (6) festgelegt wird,
- eine der Spannungen der drei Phasen der Quelle (2) vor dem Schutzschalter gemessen wird,

**dadurch gekennzeichnet, dass**

- der Wert einer eingeschlossenen elektrischen Ladung an der kapazitiven Last (4) bei jedem Öffnen des Schutzschalters (6) kontrolliert und gespeichert wird, und zwar für die drei Phasen, und
- dieser Wert für die Schließvorgänge berücksichtigt wird.

**2.** Verfahren nach Anspruch 1, wobei absichtliche Betätigungen zum Öffnen der drei Phasen durchgeführt werden, indem für jede Phase eine Trennung der Kontakte des Schutzschalters (6) durchgeführt wird, die mit einem Zeitpunkt synchronisiert ist, welcher in Bezug auf einen Zeitpunkt, der einer Spannungsspitze entspricht, um die festgelegte Lichtbogendauer vorauseilt, in Anbetracht einer Erfassung von Nulldurchgängen einer einzigen Referenzspannung $\underline{v}$, unter Berücksichtigung nur derjenigen Nulldurchgänge, bei denen $\underline{v}$ einen Anstieg d$\underline{v}$/dt hat, welcher konstant ist, entweder positiv oder negativ, und welcher während der Verkettungen Öffnen-Schließen konstant bleibt.

**3.** Verfahren nach Anspruch 1, wobei absichtliche Betätigungen zum Schließen der drei Phasen durchgeführt werden, indem jede derselben zu dem Zeitpunkt geschlossen wird, zu dem die voraussichtliche Spannung, die an die Klemmen jeder kapazitiven Last angelegt werden wird, der eingeschlossenen Ladung entspricht, welche bei einem diesem Schließen vorangegangenen Öffnen gespeichert worden ist.

**4.** Vorrichtung zum Betätigen wenigstens einer kapazitiven Last (4), die von einer Dreiphasenspannungsquelle (2) gespeist wird, die somit drei Phasen aufweist, welche zueinander phasenverschoben sind, umfassend:

- einen Schutzschalter mit unabhängigen Polen (6), über welchen die Quelle die kapazitive Last speist und welcher dafür vorgesehen ist, Öffnungs- und Schließvorgänge für jede der drei Phasen bei absichtlichen Betätigungen durchzuführen, und
- ein Kontroll- und Steuerungssystem (20), das dafür ausgelegt ist, Öffnungs- und Schließbefehle an den Schutzschalter (6) zu senden, und

eine Synchronisationsvorrichtung (26),

- welche die Öffnungs- und Schließbefehle empfängt und den Schutzschalter (6) steuert,
- in welcher eine festgelegte Lichtbogendauer für den Schutzschalter gespeichert ist,
- welche Signale empfängt, die für eine der Spannungen der drei Phasen der Quelle (2) vor dem Schutzschalter (6) repräsentativ sind,

**dadurch gekennzeichnet, dass** die Synchronisationsvorrichtung dafür ausgelegt ist, den Wert einer eingeschlossenen elektrischen Ladung an der kapazitiven Last (4) bei jedem Öffnen des Schutzschalters (6) zu kontrollieren, und zwar für die drei Phasen, und diesen Wert für die Schließvorgänge zu berücksichtigen, und die Zeit zu messen, die seit jeder Betätigung zum Öffnen vergangen ist, und in dem Falle, wenn die zum Zeitpunkt des Schließens vergangene Zeit zu lang ist, automatisch von einem Ziel Spitzenwert der Spannung zu einem Ziel null der Spannung umzuschalten.

## Claims

**1.** A method of switching at least one capacitive load (4) that is powered by a three-phase voltage source (2), thus having three phases that are phase-shifted relative to one another, and the switching being performed by means of an independent pole circuit breaker (6) that receives opening and closing orders and that is capable of performing opening and closing operations for each of the three phases during intentional switching operations, wherein

• an arcing time is set for the circuit breaker (6) ;
• one of the voltages of the three source phases (2) upstream from the circuit breaker is measured;

**Characterized in that**:

• the value of an electric charge trapped in the capacitive load (4) on each opening operation of the circuit breaker (6) is monitored and stored, with this being done for all three phases; and
• this value is taken into account when performing closing operations.

**2.** A method according to claim 1, wherein intentional opening operations of the three phases are performed by causing, for each phase, the contacts of the circuit breaker (6) to separate synchronously with an instant that is in advance to the set arcing time relative to an instant corresponding to a voltage peak, it being given that zero crossings of a single reference voltage $\underline{v}$ are detected, with consideration being given only to those zero crossings in which $\underline{v}$ has a slope dv/dt that is constant and may be positive or negative, and that remains the same during opening and closing sequences.

**3.** A method according to claim 1, wherein intentional closing operations of the three phases are performed by closing each of them at a moment when the prospective voltage that is to be imposed on the terminals of each capacitive load corresponds to the trapped charge as stored during an opening operation preceding the closing operation.

**4.** A device for switching at least one capacitive load (4) that is powered by a three-phase voltage (2), thus having three phases that are phase-shifted relative to one another and the device comprising:

• an independent pole circuit breaker (6) via which the source powers the capacitive load and that is designed to perform opening and closing operations on each of the three phases during intentional switching operations; and
• a monitoring and control system (20) adapted to send opening and closing orders to the circuit breaker (6) ;
• a synchronization device (26):

  • that receives the opening and closing orders and that controls the circuit breaker (6);
  • that stores an arcing time set for the circuit breaker;
  • that receives signals representative of one of the voltages of the three phases of the source (2) upstream from the circuit breaker (6);

**characterized in that** the synchronization device is adapted to monitor the value of electric charge trapped in the capacitive load (4) on each occasion the circuit breaker is opened (6), with this being done for all three phases, and to take account of this value for closing operations; and
measures the time that has elapsed since each opening operation and that changes automatically from a voltage peak target to a voltage zero target in the event of the time that has elapsed at the moment of closure being excessive.

# FIG. 1

# FIG. 2

Ucb

R1    R    R2

ΔT    ΔT

Uprearc0

To

t

## FIG. 3

|Ucb|

R1    R    R2

ΔT    ΔT

Uprearc1

T1

t

Δ

## FIG. 4

FIG. 5

FIG. 6

FIG. 7

FIG. 8

FIG. 9

FIG. 10

**EP 3 230 998 B1**

## RÉFÉRENCES CITÉES DANS LA DESCRIPTION

**Documents brevets cités dans la description**

- US 2013300215 A1